# EUROPÄISCHE PATENTSCHRIFT

(11) **EP 3 538 963 B1**
(45) Veröffentlichungstag und Bekanntmachung des Hinweises auf die Patenterteilung: **30.12.2020**
(21) Anmeldenummer: 17808792.0
(22) Anmeldetag: 10.11.2017
(51) Int. Cl.: G05B 23/02

(54) **VERFAHREN ZUM BETRIEB EINES ZUSTANDSÜBERWACHUNGSSYSTEMS EINER SCHWINGMASCHINE UND ZUSTANDSÜBERWACHUNGSSYSTEM**
METHOD FOR OPERATING A STATE MONITORING SYSTEM OF A VIBRATING MACHINE AND STATE MONITORING SYSTEM
PROCÉDÉ POUR FAIRE FONCTIONNER UN SYSTÈME DE SURVEILLANCE D'ÉTAT D'UNE MACHINE VIBRANTE ET SYSTÈME DE SURVEILLANCE D'ÉTAT

(30) Priorität: 11.11.2016 DE 102016013406
(43) Veröffentlichungstag der Anmeldung: 18.09.2019
(73) Patentinhaber: Schenck Process Europe GmbH, 64293 Darmstadt (DE)
(72) Erfinder: SCHAEFER, Jan, 64295 Darmstadt (DE)
(86) Internationale Anmeldenummer: PCT/EP2017/078933
(87) Internationale Veröffentlichungsnummer: WO 2018/087316

(56) Entgegenhaltungen:
- WO-A1-2015/117750
- WO-A1-2015/150267
- US-B1- 6 308 822

## Beschreibung

Die Erfindung betrifft ein Verfahren zum Betrieb eines Zustandsüberwachungssystems einer Schwingmaschine gemäß dem Oberbegriff des Patentanspruchs 1 und ein Zustandsüberwachungssystem gemäß dem Oberbegriff des Patentanspruchs 7.

Die Zustandsüberwachung von Schwingmaschinen ist in mehrerlei Hinsicht von Interesse. Da Schwingmaschinen einer dynamischen Dauerbelastung unterliegen, ist eine Vielzahl von Bauelementen dieser Maschinen einem hohen Verschleiß unterworfen. Da Ausfälle von Maschinenteilen oder der gesamten Schwingmaschine zu Produktionsausfällen und Umsatzverlusten führen, sind die Hersteller von Schwingmaschinen bestrebt, ihren Kunden eine möglichst genaue Information darüber geben zu können, wann Verschleißteile ausgetauscht werden sollen bzw. wann Wartungsarbeiten erledigt werden sollen, um größere Schäden oder Stillstandszeiten zu vermeiden.

Aus der WO 2015/ 150267 A1 ist beispielsweise ein Schwingungstestsystem bekannt, das in der Lage ist, Schwingungen oder andere Kenngrößen eines Rüttlers zu detektieren und diese in der Form auszuwerten, dass auf Basis der ermittelten Werte und einer prädeterminierten Gesamtlebensdauer des Rüttlers die Restlebenszeit des Schwingungstestsystems ausgegeben werden kann. Hierbei spricht man gemäß DIN 13306 von einer vorausbestimmten Instandhaltung, die letztlich auf Erfahrungen beruht, die zeitbasiert oder lastbasiert sind.

Weiterhin ist aus der WO 2015/117750 A1 eine Schwingmaschine mit einer Vorrichtung zur Zustandsüberwachung bekannt, mittels der das Schwingverhalten der Schwingmaschine im Betrieb messtechnisch erfasst und ausgewertet werden kann. Mit Hilfe dieser bekannten Vorrichtung zur Zustandsüberwachung ist es möglich, festzustellen, ob eine Schwingmaschine in der erwarteten Weise schwingt und somit ihrer Spezifikation genügt. Weiterhin sind Schäden an Bauteilen, die bereits aufgetreten sind, und daher Abweichungen vom idealen Schwingverhalten bewirken, auffindbar. In diesem Zusammenhang kann daher von zustandsorientierter Instandhaltung gesprochen werden. Die Interpretation der Schäden aus dem Schwingverhalten bzw. die Entscheidung, welche Bauteile ausgetauscht werden müssen, bzw. welche Maßnahmen zur Beseitigung der Fehler im Schwingverhalten durchgeführt werden müssen, ist jedoch nach wie vor Sache von Experten. Diese müssen aufgrund ihrer Erfahrungen von den messtechnisch erfassten Daten des Schwingverhaltens auf mögliche Fehler und Ausfälle schließen und die entsprechenden Entscheidungen treffen, bzw. Bestellvorgänge, Wartungsarbeiten und ähnliches organisieren.

Vor diesem Hintergrund besteht die Aufgabe vorliegender Erfindung darin, bekannte Verfahren zum Betrieb eines Zustandsüberwachungssystems einer Schwingmaschine und Zustandsüberwachungssysteme weiterzuentwickeln.

Diese Aufgabe wird durch ein Verfahren zum Betrieb eines Zustandsüberwachungssystems einer Schwingmaschine mit den Merkmalen des Patentanspruchs 1 und durch ein Zustandsüberwachungssystem mit den Merkmalen des Patentanspruchs 7 gelöst.

Vorteilhafte Ausführungsformen ergeben sich aus den Unteransprüchen.

Der Grundgedanke vorliegender Erfindung besteht darin, ein Verfahren zum Betrieb eines Zustandsüberwachungssystems einer Schwingmaschine, insbesondere eines Schwingsiebs oder Schwingförderers, bereitzustellen, beim dem das Zustandsüberwachungssystem wenigstens einen zur Messwerterfassung, Bewegungserfassung und / oder Beschleunigungserfassung ausgelegten Sensor, der an einer Schwingmaschine befestigt wird, umfasst.

Unter Zustandsüberwachung wird dabei die manuell oder automatisch ausgeführte Tätigkeit zur Messung der Merkmale und Parameter des Ist-Zustandes einer Einheit in bestimmten Zeitabständen verstanden.

Unter einem Zustandsüberwachungssystem wird daher ein System zur automatisierten Durchführung einer Zustandsüberwachung verstanden.

Bei dem erfindungsgemäßen Verfahren erfasst in einem ersten Schritt a) der Sensor Signale, die in einer mit dem Sensor verbundenen Recheneinheit als Kennwerte weiterverarbeitet werden. Durch ein Messsystem in Form eines Sensors werden somit betriebs- und maschinenspezifische Parameter aufgenommen, wobei je nach Art des Sensors die zu messenden physikalischen Größen in eine elektrische Größe umgewandelt werden. Die Verbindung zur Recheneinheit kann dabei in Form einer kabellosen Verbindung, einer Funkverbindung, einer Datenübertragung oder in Form einer Kabelverbindung vorliegen. Alternativ dazu kann der Sensor in der Recheneinheit integriert oder Teil dieser sein.

In einem zweiten Schritt b) werden diese Kennwerte in Form eines Datensatzes oder mehrerer Datensätze gespeichert. In einem dritten Schritt c) können die messtechnisch erfassten Datensätze um Metadaten erweitert werden, die Informationen bezüglich des aktuellen Zustandes der Schwingmaschine enthalten. In einem weiteren Schritt werden die Kennwerte und gespeicherten Datensätze anschließend ausgewertet.

Die Auswertung oder Analyse dient dazu, die elektrischen Signale, Kennwerte und Datensätze so umzuwandeln, dass sie in direkter Korrelation zu den überwachten Betriebs- und Maschinenzuständen stehen.

Weiterhin kann eine Auswertung oder Analyse von Messdaten, die durch Transformation der Messdaten ermittelt wurden, in Form einer Frequenz - oder Orbitanalyse erfolgen.

Bei der vorliegenden Erfindung werden die Datensätze und die um Metadaten erweiterte Datensätze in einen externen, zentralen Datenspeicher übertragen und dort gespeichert. Weiterhin wird durch das Verknüpfen der aus den Daten und einer zugehörigen Semantik bestehenden Information, was auch als "Data-Mining" bezeichnet wird, Wissen generiert. Die Ablage dieses generierten Wissens wird wiederum als sogenannte Wissensbasis bezeichnet. Die Wissensbasis kann jedoch aus zwei Quellen gespeist werden, zum einen aus dem Datenspeicher durch die zuvor beschriebene Anwendung des "Data-Mining", zum anderen mittels theoretischer Modelle.

Weiterhin wird aus der Wissensbasis ein Expertensystem generiert(, das sowohl auf dem zuvor beschriebenen Data-Mining als auch auf theoretischen Modellen beruhen kann.) Unter einem Expertensystem wird dabei eine Software verstanden, die Menschen bei der Lösung von komplexeren Problemen wie ein Experte unterstützen kann, indem es Handlungsempfehlungen aus einer Wissensbasis ableitet. Ein Expertensystem enthält eine Wissenserwerbskomponente, also die Funktionalität, um die Wissensbasis zu erstellen und zu verbessern und eine Problemlösungskomponente, die zur Verarbeitung der in der Wissensbasis gesammelten Information dient.

Bei der Zustandsüberwachung von Schwingmaschinen ist zur Signalinterpretation Expertenwissen erforderlich. Es wird von der Annahme ausgegangen, dass sich die Schwingmaschine wie ein Starrkörper verhält und sechs Bewegungs-Freiheitsgrade besitzt. Dementsprechend kann die Schwingmaschine in Richtung der x-, y- und z-Achse und um diese Achsen unterschiedliche Bewegungsmuster in beliebiger Komplexität vollführen.

Bezogen auf die Analyseergebnisse, insbesondere Zustandsgrößen, Spektren, Orbits etc. bedarf es der umfassenden Kenntnis des Zustandsüberwachungssystems einerseits als auch der Ursache-Wirkungszusammenhänge der überwachten Schwingmaschine andererseits. Diese Kenntnisse sind notwendig, um eine Diagnose erstellen zu können und die erhaltenen Messergebnisse einer konkreten Schadensursache zuordnen zu können. Ohne dieses Expertenwissen ist es nicht möglich, auf Ursachen dafür zu schließen, dass z.B. die Querbeschleunigung kontinuierlich zunimmt, während die Phasenlage der Längsbeschleunigung fortlaufend abnimmt. Wie sich diese Zustandsgrößen/Kennwerte im Zeitverlauf wahrscheinlich fortsetzen und wann die Maschine wahrscheinlich tatsächlich ausfällt (Prognose) bedarf überdies einer umfassen Erfahrungsbasis bezogen auf ähnliche vergangene Schadensverläufe. Im Falle der Schwingmaschinen wirken somit eine Vielzahl an Einflussfaktoren, z.B. Beladung, Antrieb, Verschleißvorgänge auf eine Vielzahl an Zustandsgrößen. Die Herausforderung mehrere Zustandsgrößen miteinander in Beziehung zu setzen und gleichzeitig deren zeitliche Verläufe zu berücksichtigen, um zu einer hinreichend verlässlichen Diagnose und Prognose zu gelangen, stellt für einen Menschen eine größere Problematik als für eine Recheneinheit dar. Dies bezieht sich sowohl auf den Wissenserwerb als auch auf die Problemlösung. Letztendlich muss das Expertensystem/die gewonnene künstliche Intelligenz anhand der Messdaten einen Schadensfall von einem anderen unterscheiden können, beispielsweise eine Überladung von einem Riss. Gleichzeitig muss das Expertensystem /die künstliche Intelligenz in der Lage sein, natürliche und unschädliche Schwankungen , z.B. Beladungszustände, Antriebsgeschwindigkeiten, Außentemperaturen etc., von tatsächlichen Schadenszuständen zu differenzieren. Ist die Diagnose mit ausreichender Sicherheit erstellt, muss das Expertensystem /die künstliche Intelligenz unterstützend bei der Frage wirken, bis wann welche Instandhaltungsmaßnahmen, z.B. Austausch einer Hohltraverse, Optimierung der Materialaufgabe, zu tätigen sind, um eine optimierte prädiktive Instandhaltung zu gewährleisten. Dies bedeutet, dass das gewonnene Expertensytem, wieder auf das Zustandsüberwachungssystem einer Schwingmaschine, aus der Daten für die Wissensbasis des Expertensystems stammen, zurück übertragen werden kann, um dort die Echtzeit-Datensätze automatisiert zu interpretieren. Zusätzlich kann das Expertensystem auch auf Zustandsüberwachungssysteme weiterer Schwingmaschinen übertragen werden.

Vorteilhafterweise betreffen die Kennwerte/Zustandsgrößen, die von der Recheneinheit verarbeitet werden, wenigstens einen Parameter aus der Gruppe: Schwingungsamplitude, Schwingfrequenz, Winkel der Hauptschwingrichtung, Abweichung zur Sollschwingrichtung, Schwingungsharmonizität oder Phasenlage der Schwingungen. Dementsprechend kann eine Auswertung oder Analyse der Kennwerte in Form einer Trendanalyse oder Grenzwertanalyse erfolgen. Hierbei können beispielsweise Maximalwerte, Effektivwerte oder beispielsweise Frequenzen betrachtet werden. Erfindungsgemäß findet die Auswertung derart statt, dass auf Basis der Kennwerte und / oder gespeicherten Datensätze von einer Recheneinheit unter Einbeziehung des Expertensystems eine Diagnose einer Anomalie im Zustand der Schwingmaschine, eine Fehlerklasse, eine Angabe eines Ausfallzeitpunkts der Schwingmaschine und/oder eine Empfehlung für eine Instandhaltungsmaßnahme erstellt und oder ausgegeben wird. Während von bestehenden Zustandsüberwachungssystemen nur Verfahrensschritte im Sinne von Messen und Analysieren umfasst werden, wobei sich die Analyse auf den Vergleich von Kennwerten mit festgelegten Grenzwerten beschränkt, wird beim erfindungsgemäßen Verfahren die Auswertung und Interpretation von Kennwerten oder Messdaten automatisiert übernommen. Damit wird ein signifikanter Beitrag zur Effizienz- und Effektivitätssteigerung im Bereich der Instandhaltung geleistet. Es wird in diesem Zusammenhang auch von einem Zustandsüberwachungs-Expertensystem oder CMES (Condition Monitoring Expert System) gesprochen. Zur Generierung eines Zustandsüberwachungs-Expertensystems CMES ist es von Vorteil, dass die oben genannten Schritte a) bis b) oder a) bis c) beliebig oft wiederholt werden.

Der Vorteil des erfindungsgemäßen Verfahrens gegenüber Verfahren, bei denen die Interpretation durch einen menschlichen Experten erfolgt, besteht darin, dass durch die Automation und die digitale Signalverarbeitung Geschwindigkeitsvorteile generiert werden. Weiterhin lässt sich das Verfahren durch Ansammlung einer Vielzahl von Kennwerten und Datensätzen kontinuierlich weiterentwickeln und / oder verbessern. Weiterhin sind die Verfahrensschritte und Ergebnisse beliebig reproduzierbar. Die Ergebnisse der Auswertung der Kennwerte und Datensätze liegen digital vor und lassen sich daher leicht kommunizieren und archivieren.

Das Verfahrens sieht außerdem vor, dass die Metadaten, um die die messtechnisch erworbenen Datensätze erweitert werden, die Informationen bezüglich der Klasse der Schwingmaschine, dem tatsächlich beobachteten Maschinenzustand, Zusatzangaben zur Schwingmaschine, Betriebsinformationen, Umgebungstemperatur, Betriebszeiten, Betriebszyklen, Belastung, Drehzahl, Ausfallzeiten und / oder bereits getätigte Instandhaltungsmaßnahmen beinhalten.

Gemäß alternativer Ausgestaltungen des Verfahrens können die Metadaten den Datensätzen entweder mittels manueller Eingabe oder mittels digitaler Datenakquise zugeordnet werden.

Weiterhin können die um die Metadaten erweiterten Datensätze ebenfalls gespeichert und somit weiteren Nutzern oder Anwendern zur Verfügung gestellt werden.

Die Wissensgenerierung des Zustandsüberwachungs-Expertensystems kann vorteilhafterweise dadurch erfolgen, dass die Generierung der Kennwerte, die Generierung der Datensätze, die Auswertung der Kennwerte, der gespeicherten Datensätze und / oder der um die Metadaten erweiterten Datensätze auf einem empirischen Modell und/ oder einem theoretischen Modell beruht.

Mit der Erfindung wird außerdem ein Zustandsüberwachungssystem für eine Schwingmaschine, das wenigstens einen zur Messwerterfassung ausgelegten Sensor und eine zur Datenakquise und / oder zur Datenarchivierung und/oder Datenauswertung ausgelegte Recheneinheit aufweist, bereitgestellt. Erfindungsgemäß umfasst das Zustandsüberwachungssystem zudem eine Anzeigevorrichtung, die vorgesehen ist, eine auf der Datenauswertung beruhende Diagnose oder Prognose einer Anomalie dieser oder einer weiteren Schwingmaschine, eine Empfehlung für eine Instandhaltungsmaßnahme oder eine Angabe eines Ausfallzeitpunkts dieser oder einer weiteren Schwingmaschine anzugeben. Zwischen der Rechnereinheit des Zustandsüberwachungssystems und einem externen, zentralen Datenspeicher bzw. einer externen, zentralen Recheneinheit, der bzw. die auf Basis der übermittelten Datensätze und/oder theoretischer Modelle zur Generierung eines Expertensystems dient, ist dabei eine bidirektionale Verbindung vorgesehen. Damit kann die Diagnose, Empfehlung oder Angabe des Zustandsüberwachungssystems auf Basis der Informationen/Daten aus dem Expertensystem erfolgen.

Alternative Ausgestaltungen des Zustandsüberwachungssystems für eine Schwingmaschine sehen vor, dass der Sensor und / oder die Recheneinheit in einem Handheld, einem portablen Gerät oder einem Online-Gerät angeordnet sind.

Während das Handheld eine sehr kompakte Ausführungsform mit einer einfachen Bedienbarkeit darstellt, ist ein portables Gerät messtechnisch umfangreicher und verlangt nach einer aufwändigeren Installation an der Schwingmaschine.

Unter einem Online-Gerät wird demgegenüber ein fest installiertes System verstanden, welches auf unbestimmte Zeit zur Überwachung an der Maschine installiert ist.

Als besonders vorteilhaft erweist sich dabei, wenn das Zustandsüberwachungssystem über eine ausreichende Anzahl von Messkanälen oder Sensoren im verfügt, so dass jeglicher physikalischer Parameter, Kennwert, erfasst werden kann, der den Betriebs- und / oder Verschleißzustand der Schwingmaschine wiedergibt.

Vorteilhafterweise wird das Zustandsüberwachungssystem hinsichtlich der Messkanäle und Sensoren modular gestaltet, so dass eine Adaption des Systems an eine Vielzahl von Schwingmaschinentypen und Anlagen möglich ist.

Das erfindungsgemäße Verfahren wird nachstehend anhand eines Prozessschaubilds näher erläutert, wobei weitere Merkmale und Vorteile der Erfindung offenbart werden.

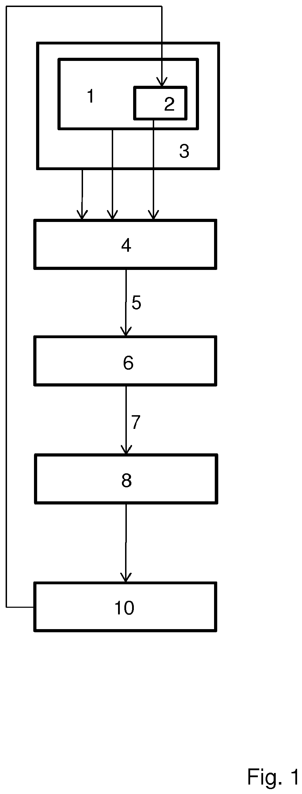

Es zeigt
Fig. 1 Prozessschaubild einer Abfolge von erfindungsgemäßen Verfahrensschritten
Fig. 2 eine weitere Ausführungsform des erfindungsgemäßen Verfahrens
Fig. 3 eine schematische Darstellung der Abläufe des erfindungsgemäßen Verfahrens zum Betrieb eines Zustandsüberwachungssystems

Am Standort 3 einer Schwingmaschine 1 startet der Kernprozess zur systematischen Generierung und Aufbereitung von Kennwerten, Daten, Information oder Wissen und zur Integration dieser Kennwerte, Daten, Information und Wissen in ein Zustandsüberwachungssystem 2. Die Eingangsgrößen zur Datenakquise 5 werden zum einen aus den Informationen am Standort 3 der Schwingmaschine, aus Informationen über die Schwingmaschine 1 oder von dem von dem Zustandsüberwachungssystem 2 umfassten Sensor oder Sensoren geliefert. Während die Informationen aus dem Zustandsüberwachungssystem 2 als Kennwerte oder Daten bezeichnet werden, wird für die Informationen aus dem Standort oder der Schwingmaschine selbst die Bezeichnung Metadaten verwendet. Aus diesen Informationen, Kennwerten, Daten, Metadaten wird ein Datensatz 4 oder mehrere Datensätze gebildet, die dann in einem Datenspeicher 6 gespeichert werden und damit für eine Datenauswertung 7 zur Verfügung stehen. Unter der Datenauswertung 7 wird dabei die Transformation von Daten oder Information in Wissen durch Anwendung von Data Mining-Methoden verstanden. Zur Generierung von Wissen werden üblicherweise empirische Lernverfahren ("Data Mining", "Machine Learning") durch theoretische Verfahren ergänzt. Dies bedeutet, dass Wissensgenerierung auch durch Datenexperten oder Maschinenexperten auf Basis von Erfahrung, Literatur oder auf Basis eines Simulationsmodells erfolgen kann. Dementsprechend kann die Generierung oder Erweiterung einer sogenannten Wissensbasis 8 manuell oder automatisiert erfolgen.

Das in der Wissensbasis 8 gesammelte Wissen fließt wiederum in ein Zustandsüberwachungs-Expertensystem 10, üblicherweise eine Software, ein, so dass auf dessen Basis von einer Recheneinheit eine Zustandsdiagnose, eine Instandhaltungsempfehlung sowie eine Ausfallprognose bezogen auf die überwachte Schwingmaschine ausgegeben wird.

Diese Empfehlungen oder Angaben können einerseits von einer entfernt vom Standort 3 der Schwingmaschine 1 angeordneten Recheneinheit oder Warte ausgegeben werden oder aber direkt an der Schwingmaschine 1 zur Verfügung gestellt und umgesetzt werden.

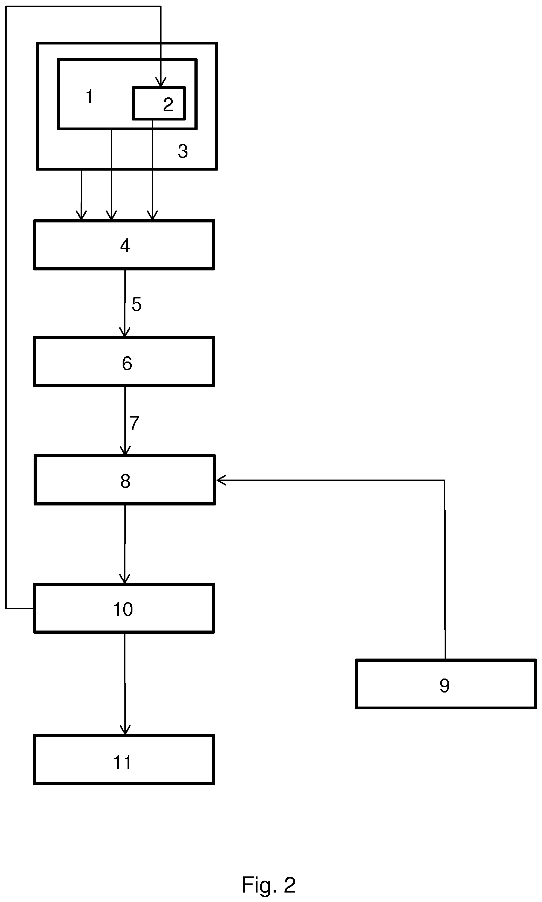

Außerdem können diese Kennwerte, Daten, Information und Empfehlungen, bzw. der Inhalt der Wissensbasis 8 auch wie in Fig. 2 dargestellt für andere bzw. alternative Standorte 11, Schwingmaschinen verwendet und eingesetzt werden.

Aus Fig. 2 ist eine Erweiterung des erfindungsgemäßen empirischen Ansatzes dargestellt. Hier wird die Wissensbasis 8 noch um Informationen erweitert, die über ein mathematisches oder Simulationsmodell 9 entwickelt werden. Den Input für das Simulationsmodell liefern üblicherweise externe Maschinenexperten, die ihr Wissen aus Fachliteratur, maschinenspezifischen Dokumenten, oder praktischer Erfahrung im Umgang mit Schwingmaschinen beziehen. Der Inhalt der Wissensbasis 8, der die Grundlage für eine auf der Zustandsüberwachung basierenden Diagnose bildet, umfasst z.B. mathematische und logische Regeln, Businessabläufe, bedingte Wahrscheinlichkeiten, Neuronale Netze und Bayes-Netze.

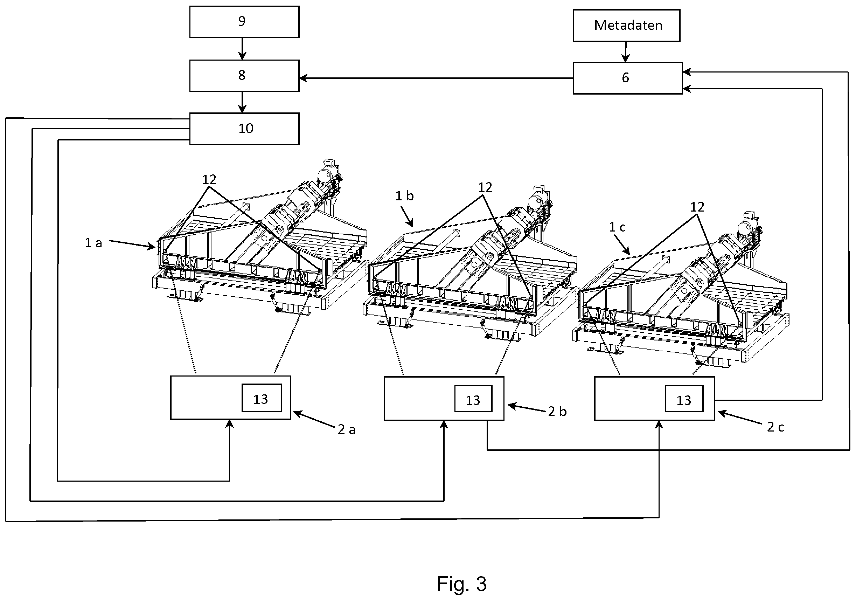

In Fig. 3 ist schematisch das erfindungsgemäße Verfahren zum Betrieb eines Zustandsüberwachungssystems einer oder mehrerer Schwingmaschinen 1a, 1b, 1c in Form eines Schwingsiebs dargestellt. An Seitenwangen der Schwingmaschine 1 sind wenigstens zwei Sensoren 12 angebracht, die in Datenverbindung mit einer Recheneinheit 13 eines Zustandsüberwachungssystems 2a, 2b, 2c stehen. Die Datenverbindung, die in der Figur gestrichelt dargestellt ist, kann über eine Funkverbindung, kabelgebundene Verbindung, über eine permanente oder temporäre Verbindung erfolgen. Die von den Sensoren 12 gelieferten Messdaten werden in der Recheneinheit 13 zu Kennwerten verarbeitet und in Form von Datensätzen gespeichert. Die Recheneinheit 13 des Zustandsüberwachungssystems 2b, 2c steht wiederum mit einem Datenspeicher 6 in Verbindung, in dem die Datensätze aus einem oder mehrerer Zustandsüberwachungssysteme 2b, 2c gespeichert werden können. Die Datensätze, die die messtechnisch erfassten Kennwerte enthalten, können zudem um Metadaten erweitert werden, die die tatsächlichen Zustände der Schwingmaschine 1 oder andere Betriebsinformationen enthalten. Aus den gespeicherten Datensätzen oder den um Metadaten erweiterten Datensätze werden Informationen gewonnen und Informationen verknüpft, so dass eine Wissensbasis 8 generiert werden kann. Diese Wissensbasis 8 wird dabei aus zwei Quellen gespeist, zum einen durch Data-Mining aus den messtechnisch erfassten Datensätzen und um Metadaten erweiterten Datensätzen und zum anderen durch theoretische Modelle oder Simulationsmodelle 9.

Das in der Wissensbasis 8 gespeicherte Wissen wird in eine Software übertragen, welche als Expertensystem 10 bezeichnet werden kann. Das Expertensystem 10 kann schließlich auf die Zustandsüberwachungssysteme 2a, 2b, 2c überspielt werden um dort lokal die Messdaten bzw. die aus den Messdaten gewonnenen Kennwerte zu interpretieren. Die Handlungsempfehlungen, die aus dem Expertensystem 10 abgeleitet werden, können wiederum "an dem Zustandsüberwachungssystem 2a, 2b, 2c angezeigt werden." Daraus resultiert der Vorteil, dass ein erfindungsgemäßes Zustandsüberwachungssystem 2a, 2b, 2c bei der Interpretation der messtechnisch erfassten Daten keinen menschlichen Experten mehr benötigt und dennoch eine zustandsbasierte und/ oder prädiktive Instandhaltung ermöglichen.

### Bezugszeichenliste

- 1: Schwingmaschine
- 2: Zustandsüberwachungssystem
- 3: Schwingmaschinenstandort
- 4: Datensatz
- 5: Datenakquise
- 6: Datenspeicher
- 7: Datenauswertung
- 8: Wissensbasis
- 9: Simulationsmodell
- 10: In Software integriertes Expertensystem
- 11: Alternative Standorte von Schwingmaschinen
- 12: Sensor
- 13: Recheneinheit

## Patentansprüche

1. Verfahren zum Betrieb eines Zustandsüberwachungssystems (2, 2a, 2b, 2c) einer Schwingmaschine (1, 1a, 1b, 1c) in Form eines Schwingförderers oder eines Schwingsiebs,
wobei das Zustandsüberwachungssystem (2, 2a, 2b, 2c) wenigstens einen zur Bewegungserfassung und / oder Beschleunigungserfassung ausgelegten Sensor (12), der an der Schwingmaschine (1, 1a, 1b, 1c) befestigt wird, umfasst,
wobei a) der Sensor (12) Messdaten liefert, die in einer mit dem Sensor (12) verbundenen Recheneinheit (13) zu Kennwerten weiterverarbeitet werden,
wobei b) die Kennwerte in Form eines Datensatzes oder mehrerer Datensätze gespeichert werden,
c) unter Berücksichtigung der durch die Datensätze gelieferte Information und/oder auf Grundlage theoretischer Modelle eine Wissensbasis (8) für ein Expertensystem (10) generiert wird,
d) die Datensätze unter Einbeziehung des Expertensystems (10) in der Recheneinheit (13) dieser oder weiterer Schwingmaschinen (1, 1a, 1b, 1c) ausgewertet werden,
wobei e) von der Recheneinheit (13) eine Diagnose und/oder Prognose einer Anomalie im Zustand der Schwingmaschine, eine Empfehlung für eine Instandhaltungsmaßnahme oder eine Angabe eines Ausfallzeitpunkts der Schwingmaschine erstellt und/oder ausgegeben wird,

2. Verfahren nach Anspruch 1, **dadurch gekennzeichnet, dass** die Kennwerte wenigstens einen Parameter aus der Gruppe: Schwingungsamplitude, Schwingfrequenz, Winkel der Hauptschwingrichtung, Abweichung zur Sollschwingrichtung, Schwingungsharmonizität oder Phasenlage der Schwingungen betreffen.

3. Verfahren nach Anspruch 1 oder 2, **dadurch gekennzeichnet, dass** zur Generierung der Wissensbasis (8) zur Erstellung des Expertensystems (10) die Schritte a) und b) beliebig oft wiederholt werden.

4. Verfahren nach einem der Ansprüche 1 bis 3, **dadurch gekennzeichnet, dass** die Datensätze, die die messtechnisch erfassten Kennwerte enthalten, um Metadaten erweitert werden, die Informationen bezüglich der Klasse der Schwingmaschine, Zusatzangaben zur Schwingmaschine, Messparameter des Zustandsüberwachungssystems, Betriebsinformationen, Umgebungstemperatur, Betriebszeiten, Betriebszyklen, Belastung, Drehzahl, Ausfallzeiten und / oder bereits getätigte Instandhaltungsmaßnahmen beinhalten.

5. Verfahren nach einem der vorhergehenden Ansprüche, **dadurch gekennzeichnet, dass** die Metadaten den Datensätzen mittels manueller Eingabe oder mittels digitaler Datenakquise zugeordnet werden.

6. Verfahren nach einem der vorhergehenden Ansprüche, **dadurch gekennzeichnet, dass** die Generierung von Kennwerten, die Generierung von Datensätzen, die Auswertung der Kennwerte, der gespeicherten Datensätze und / oder der um die Metadaten erweiterten Datensätze auf einem empirischen Modell und/oder einem theoretischen Modell beruht.

7. Zustandsüberwachungssystem (2, 2a, 2b, 2c) für eine Schwingmaschine (1, 1a, 1b, 1c), das wenigstens einen zur Messwerterfassung ausgelegten Sensor (12) und eine zur Datenakquise und / oder zur Datenarchivierung und/oder Datenauswertung ausgelegte Recheneinheit (13) aufweist, wobei das Zustandsüberwachungssystem (2, 2a, 2b, 2c) eine Anzeigevorrichtung umfasst, die vorgesehen ist, eine auf der Datenauswertung beruhende Diagnose einer Anomalie der Schwingmaschine (1, 1a, 1b, 1c), eine Empfehlung für eine Instandhaltungsmaßnahme oder eine Angabe eines Ausfallzeitpunkts der Schwingmaschine (1, 1a, 1b, 1c) anzugeben, **dadurch gekennzeichnet, dass** zwischen der Recheneinheit (13) des Zustandsüberwachungssystems (2, 2a, 2b, 2c) und einem externen, zentralen Datenspeicher (6), der auf Basis der übermittelten Datensätze und/oder theoretischer Modelle zur Generierung eines Expertensystems (10) dient, eine Verbindung vorgesehen ist, derart dass die Diagnose, Empfehlung oder Angabe auf Basis der Informationen/Daten aus dem Expertensystem (10) erfolgt.

8. Zustandsüberwachungssystem (2, 2a, 2b, 2c) für eine Schwingmaschine (1, 1a, 1b, 1c) gemäß Patentanspruch 7, **dadurch gekennzeichnet, dass** der Sensor (12) und / oder die Recheneinheit (13) in einem Handheld, einem portablen Gerät oder einem Online-Gerät angeordnet sind.

## Claims

1. A method for the operation of a state monitoring system (2, 2a, 2b, 2c) of a vibrating machine (1, 1a, 1b, 1c) in the form of a vibrating conveyor or a vibrating screen,
wherein the state monitoring system (2, 2a, 2b, 2c) comprises at least one sensor (12) designed for movement detection and / or acceleration detection, which is attached to the vibrating machine (1, 1a, 1b, 1c),
wherein a) the sensor (12) supplies measuring data, which is further processed in a computing unit (13) connected to the sensor (12) to form characteristic values,
wherein b) the characteristic values are stored in the form of a data record or a plurality of data records,
c) a knowledge base (8) for an expert system (10) is generated, taking into account the information supplied by the data records and / or on the basis of theoretical models,
d) the data records are evaluated, with use of the expert system (10), in the computing unit (13) of said or other vibrating machines (1, 1a, 1b, 1c),
wherein e) a diagnosis and / or prognosis of an anomaly in the state of the vibrating machine, a recommendation for a servicing measure or an indication of an instant of failure of the vibrating machine is drawn up and / or issued by the computing unit (13),

2. The method according to claim 1, **characterized in that** the characteristic values pertain to at least one parameter from the group: vibration amplitude, vibration frequency, angle of main vibration direction, deviation from target vibration direction, vibration harmonicity or phase position of the vibrations.

3. The method according to claim 1 or 2, **characterized in that** steps a) and b) are repeated as often as required to generate the knowledge base (8) for creating the expert system (10).

4. The method according to any one of claims 1 bis 3, **characterized in that** the data records, which contain the characteristic values acquired by measurement, are extended by metadata which contains information with regard to the class of the vibrating machine, additional information on the vibrating machine, measuring parameters of the state monitoring system, operating information, ambient temperature, operating times, operating cycles, load, speed, downtime and / or servicing measures that have already been initiated.

5. The method according to any one of the preceding claims, **characterized in that** the metadata is assigned to the data records by means of manual input or digital data acquisition.

6. The method according to any one of the preceding claims, **characterized in that** the generation of characteristic values, the generation of data records, the evaluation of the characteristic values, of the stored data records and / or the data records extended by the metadata are based on an empirical model and / or a theoretical model.

7. A state monitoring system (2, 2a, 2b, 2c) for a vibrating machine (1, 1a, 1b, 1c), which comprises at least one sensor (12) for recording measuring values and a computing unit (13) for data acquisition and / or data archiving and / or data evaluation, wherein the state monitoring system (2, 2a, 2b, 2c) comprises a display device provided for indicating a diagnosis of an anomaly of the vibrating machine (1, 1a, 1b, 1c) based on the data evaluation, a recommendation for a servicing measure or an indication of an instant of failure of the vibrating machine (1, 1a, 1b, 1c), **characterized in that** a connection is provided between the computing unit (13) of the state monitoring system (2, 2a, 2b, 2c) and an external central data store (6), which is used to generate an expert system (10) on the basis of the transmitted data records and / or theoretical models, in such a way that the diagnosis, recommendation or indication is carried out on the basis of the information / data from the expert system (10).

8. The state monitoring system (2, 2a, 2b, 2c) for a vibrating machine (1, 1a, 1b, 1c) according to claim 7, **characterized in that** the sensor (12) and / or the computing unit (13) are arranged in a handheld, a portable device or an online device.

## Revendications

1. Procédé pour faire fonctionner un système de surveillance d'état (2, 2a, 2b, 2c) d'une machine vibrante (1, 1a, 1b, 1c) sous forme de transporteur oscillant et de tamis vibrant,
le système de surveillance d'état (2, 2a, 2b, 2c) comprenant au moins un capteur (12), conçu pour capter le mouvement et/ou pour capter l'accélération, qui est fixé à la machine vibrante (1, 1a, 1b, 1c),
a) le capteur (12) fournissant des données de mesure qui font l'objet d'un traitement ultérieur dans une unité de calcul (13) raccordée au capteur (12) pour donner des valeurs caractéristiques,
b) les valeurs caractéristiques étant stockées sous la forme d'un jeu de données ou de plusieurs jeux de données,
c) une base de connaissances (8) pour un système expert (10) étant générée, en prenant en compte l'information fournie par les jeux de données et/ou sur la base de modèles théoriques,
d) les jeux de données étant, en faisant appel au système expert (10), analysés dans l'unité de calcul (13) de cette machine vibrante (1, 1a, 1b, 1c) ou d'autres machines vibrantes,
e) un diagnostic et/ou pronostic d'une anomalie dans l'état de la machine vibrante, une recommandation pour une mesure d'entretien ou une indication d'un instant de défaillance de la machine vibrante étant établis et/ou délivrés par l'unité de calcul (13).

2. Procédé selon la revendication 1, **caractérisé en ce que** les valeurs caractéristiques concernent au moins un paramètre figurant dans le groupe : amplitude des vibrations, fréquence des vibrations, angle de la direction de vibrations principale, écart à la direction de vibrations de consigne, harmonicité de vibrations ou position de phase des vibrations.

3. Procédé selon la revendication 1 ou 2, **caractérisé en ce que**, pour la génération de la base de connaissances (8) destinée à l'établissement du système expert (10), les étapes a) et b) sont répétées à volonté.

4. Procédé selon l'une des revendications 1 à 3, **caractérisé en ce que** les jeux de données qui contiennent les valeurs caractéristiques saisies par des mesures sont étendues pour inclure des métadonnées qui contiennent des informations portant sur la classe de la machine vibrante, des indications supplémentaires sur la machine vibrante, des paramètres de mesure du système de surveillance d'état, des informations de fonctionnement, la température ambiante, des temps de fonctionnement, des cycles de fonctionnement, la charge, la vitesse de rotation, des temps de panne et/ou des mesures d'entretien déjà mises en œuvre.

5. Procédé selon l'une des revendications précédentes, **caractérisé en ce que** les métadonnées sont affectées aux jeux de données au moyen d'une entrée manuelle ou au moyen d'une acquisition de données numérique.

6. Procédé selon l'une des revendications précédentes, **caractérisé en ce que** la génération de valeurs caractéristiques, la génération de jeux de données, l'analyse des valeurs caractéristiques, des jeux de données stockés et/ou des jeux de données étendus pour inclure des métadonnées reposent sur un modèle empirique et/ou un modèle théorique.

7. Système de surveillance d'état (2, 2a, 2b, 2c) pour une machine vibrante (1, 1a, 1b, 1c), qui comporte au moins un capteur (12) conçu pour la saisie de valeurs de mesure, et une unité de calcul (13) conçue pour l'acquisition de données et/ou pour l'archivage de données et/ou l'analyse de données, le système de surveillance d'état (2, 2a, 2b, 2c) comprenant un dispositif d'affichage qui est prévu pour indiquer un diagnostic, reposant sur l'analyse de données, d'une anomalie de la machine vibrante (1, 1a, 1b, 1c), une recommandation pour une mesure d'entretien ou une indication d'un instant de défaillance de la machine vibrante (1, 1a, 1b, 1c), **caractérisé en ce que**, entre l'unité de calcul (13) du système de surveillance d'état (2, 2a, 2b, 2c) et une mémoire de données (6) centrale externe qui sert à la génération d'un système expert (10) sur la base des jeux de données transmis et/ou de modèles théoriques, il est prévu une connexion de telle sorte que le diagnostic, la recommandation ou l'indication s'effectue sur la base des informations/données en provenance du système expert (10).

8. Système de surveillance d'état (2, 2a, 2b, 2c) pour une machine vibrante (1, 1a, 1b, 1c) selon la revendication de brevet 7, **caractérisé en ce que** le capteur (12) et/ou l'unité de calcul (13) sont disposés dans un appareil portatif, un appareil portable ou un appareil en ligne.
